# FASCICULE DE BREVET EUROPEEN

(11) **EP 0 648 434 B1**
(45) Date de publication et mention de la délivrance du brevet: **09.01.2002**
(21) Numéro de dépôt: 94402303.5
(22) Date de dépôt: 14.10.1994
(51) Int. Cl.: A23P 1/16, A23L 1/0562, A23L 1/212

(54) **Mousse alimentaire contenant de la gelatine et de la crème et procédé de fabrication**
Schaumspeise enthaltend Gelatine und Sahne und Verfahren zu ihrer Herstellung
Edible foamed product containing cream and gelatin and process for making it

(30) Priorité: 14.10.1993 FR 9312214
(43) Date de publication de la demande: 19.04.1995
(73) Titulaire: Ponthier, Yves, 19130 Objat (FR)
(72) Inventeur: Mermet, Jean-Louis, F-19130 Objat (FR)
(74) Mandataire: Nony, Michel

(56) Documents cités:
- WO-A-91/11109
- GB-A- 2 131 669
- US-A- 2 131 650
- US-A- 2 588 308
- US-A- 2 954 299
- I.E. LORD: 'Everybody's Cook Book' 1925 , HENRY HOLT , NEW YORK, USA Pages 272-273 * Recette 'mousse' *

## Description

La présente invention a pour objet un procédé de fabrication de mousses alimentaires, en particulier de mousses de fruits, une composition pour la fabrication de ces mousses, ainsi que le procédé de fabrication de cette composition.

On sait que certaines préparations culinaires, en particulier les préparations pâtissières, utilisent des mousses de fruits.

Ces mousses sont réalisées à partir de purées de fruits émulsionnées avec de la crème et fixées avec de la gélatine.

La fabrication traditionnelle des mousses de fruits est un travail délicat qui, pour être mené à bien, doit dans la pratique être réalisé par de bons professionnels.

Selon ce procédé traditionnel, on commence par chauffer à environ 60°C avec de la gélatine une partie de la purée de fruits que l'on veut utiliser de manière à provoquer la fusion de la gélatine et son incorporation à la purée de fruits.

On introduit ensuite le reste de la purée de fruits qui se mélange intimement à la gélatine.

On prépare ensuite de la crème chantilly en fouettant de la crème fraîche à laquelle on a ajouté du sucre et on incorpore la préparation à base de purée de fruits à la crème chantilly avec éventuellement du blanc d'oeuf.

Ce procédé se révèle difficile à mettre en oeuvre, car il nécessite la connaissance de tours de main portant en particulier sur l'incorporation de la crème chantilly à la préparation de purée de fruits et de gélatine, cette incorporation devant entre autres être effectuée à la bonne température et sans casser la mousse qui caractérise la crème chantilly.

Pour faciliter et rendre plus rapide la fabrication de mousses de fruits, on utilise aussi une technique qui fait appel à une préparation industrielle sous forme de poudre que l'on trouve dans le commerce et qui est en général à base de poudre de fruits lyophilisés, de gélatine en poudre, de dextrose ainsi que divers agents conservateurs colorants ou arômes.

Pour réaliser la mousse à l'aide de cette préparation industrielle, il suffit de diluer la préparation sous forme de poudre dans de l'eau chaude.

Puis l'on incorpore le liquide à base de fruits ainsi obtenu à la crème chantilly préalablement préparée en procédant comme avec la méthode traditionnelle.

Comme on le voit, l'intérêt de la technique industrielle réside essentiellement dans le fait que la préparation à base de fruits et de gélatine s'effectue facilement par dispersion de poudre dans de l'eau chaude.

La présente invention a pour objet un procédé de fabrication de mousses alimentaires ayant les mêmes qualités gustatives et les mêmes qualités de tenue et de conservation que les mousses obtenues par le procédé traditionnel exécuté par les professionnels les plus compétents.

L'invention vise également à simplifier considérablement la fabrication de mousses alimentaires en supprimant purement et simplement l'opération la plus délicate qui consiste à incorporer la préparation à base de purée par exemple de fruits à la crème chantilly préalablement fabriquée.

L'invention permet en effet d'obtenir directement, dans cet exemple la mousse de fruits, en travaillant quelques minutes dans un batteur une composition à base de fruits selon l'invention et de la crème liquide d'origine animale ou végétale non montée en chantilly.

La présente invention va être décrite en se référant plus particulièrement à une mousse de fruits, mais il est clair qu'elle peut également s'appliquer à des mousses alimentaires différentes telles que des mousses de légumes, de poissons ou de crustacés par exemple.

La présente invention a pour objet un procédé de fabrication de mousses alimentaires telles que des mousses de fruits, à base de purée, de gélatine et de crème, caractérisé par le fait : que l'on mélange la purée à une composition constituée par de la gélatine contenant une charge finement dispersée ; que l'on incorpore au mélange ainsi obtenu une composition principalement constituée par un mélange de gélatine et d'émulsifiant ; et que l'on traite au batteur la composition ainsi obtenue à laquelle on a ajouté une composition à base de crème, ce qui permet d'obtenir directement la mousse alimentaire.

La charge que contient la gélatine utilisée dans la première phase du procédé, peut être constituée par toute poudre alimentaire qui n'est pas sensiblement soluble dans la gélatine fondue.

On peut selon l'invention utiliser avantageusement une charge constituée par une poudre de protéines laitières ou de protéines végétales.

Conformément à l'invention, il est préférable d'utiliser un mélange de gélatine et de charge qui contiennent entre environ 1 et 8 % en poids et de préférence entre 2 et 5 % en poids de charge.

La composition à base de gélatine et d'émulsifiant qui est ajoutée au mélange de gélatine et de charge, comporte par exemple de 15 à 50 % et de préférence de 25 à 35 % en poids d'un émulsifiant qui peut être constitué par exemple par le produit vendu sous la marque CREMODAN par la Société GRINSTED.

Conformément à l'invention, les compositions à base de gélatine peuvent être utilisées à raison par exemple de 2,5 à 5,5 kg, et de préférence de 3,5 à 4,5 kg de mélange de gélatine et d'émulsifiant pour 1 kg de mélange de gélatine et de charge.

Conformément à l'invention, l'incorporation à la purée de la gélatine contenant la charge s'effectue avantageusement à une température relativement basse, par exemple de 10°C pour éviter de détériorer les qualités gustatives de la purée.

La proportion de gélatine contenant la charge peut être par exemple de 2 à 10 % en poids de la purée, et de préférence d'environ 5 à 6 %.

La gélatine contenant la charge est avantageusement incorporée à la purée par traitement dans un batteur pendant quelques minutes.

La composition obtenue a sensiblement le même aspect que celui de la purée initiale en étant cependant légèrement plus épaisse.

Conformément à l'invention, la gélatine mélangée à l'émulsifiant est dissoute dans de l'eau chaude à raison par exemple de 1 kg de gélatine contenant l'émulsifiant pour par exemple 2 à 4 litres d'eau, et de préférence environ 3 litres.

La gélatine à base d'émulsifiant se dissout facilement dans l'eau chaude par fouettage.

Du sucre, du sel ou des épices peuvent être introduits selon l'invention dans l'une des deux compositions à base de gélatine ou dans les deux ou encore dans la purée si on le désire, en une quantité qui dépend de la qualité gustative que l'on désire conférer à la mousse.

Sans être refroidie, la préparation a base de gélatine et d'émulsifiant est alors mélangée à la composition à base de purée et de gélatine mélangée à une charge.

Lors du mélange, la chaleur de la composition à base de gélatine et d'émulsifiant est suffisante pour permettre son incorporation à la composition à base de purée qui est à basse température sans provoquer un échauffement important de l'ensemble.

Ce mélange s'effectue avantageusement pendant quelques minutes dans un batteur et avec injection d'azote sous vide de manière à éviter l'oxydation des constituants et à éviter la dénaturation du gout et de la couleur de la purée.

Conformément à l'invention, on utilise par exemple 3 kg à 5 kg de gélatine et d'émulsifiant dissouts dans l'eau pour 100 kg de préparation à base de purée, de gélatine et de charge.

On comprend que pour améliorer la qualité du produit obtenu, il est souhaitable de dissoudre la gélatine contenant l'émulsifiant dans une quantité d'eau chaude qui soit la plus faible possible tout en permettant une bonne dissolution et une bonne fluidité de la composition obtenue, ceci, pour diluer le moins possible la purée.

Conformément à l'invention, pour obtenir la meilleure mousse de fruits, il est préférable d'utiliser de la purée de fruits constituée exclusivement par des fruits broyés et filtrés avec adjonction de sucre, mais il est clair que l'on peut également utiliser des purées réalisées au moins en partie à partir de fruits lyophilisés ou déshydratés et de dextrose ainsi que de colorants et d'arômes alimentaires.

La composition selon l'invention ainsi obtenue peut être surgelée et commercialisée dans cet état.

Elle peut être également conditionnée sous vide, traitée par pasteurisation instantanée ou traitée aux ultra hautes fréquences.

La préparation de la mousse est ensuite extrêmement facile puisqu'il suffit de traiter dans un batteur pendant quelques minutes un mélange de la composition à base de purée et de gélatine selon l'invention, avec une composition à base de crème pour obtenir immédiatement une mousse dont les qualités égalent celles des meilleures mousses obtenues selon le procédé traditionnel.

La composition à base ce crème utilisée pour réaliser la mousse alimentaire selon l'invention peut comporter une ou plusieurs crèmes d'origine animale ou végétale éventuellement incorporées dans un lait également d'origine animale ou végétale.

Ce mélange est avantageusement effectué à raison de 1 kg de préparation à base de purée avec par exemple un demi à trois quarts de litre de crème.

Il est remarquable que, selon l'invention, la crème fraîche peut être utilisée telle quelle et que contrairement aux autres procédés connus elle n'a pas besoin d'être préalablement montée en chantilly.

La mousse obtenue selon l'invention présente l'aspect, la texture et les qualités gustatives des meilleures mousses réalisées par le procédé traditionnel. Elle peut être surgelée et elle présente une bonne résistance aux chocs thermiques.

Son foisonnement est de l'ordre de 2 à 3 fois le volume de ses constituants.

Cette mousse a une texture fine, non élastique et non collante.

Elle est stable pendant toute la période durant laquelle elle peut être consommée, et elle permet un bon découpage.

Par ailleurs, la demande internationale WO 91/11109 décrit un dessert congelé à basse teneur en calories, qui est réalisé à partir de polyester d'acides gras comestibles au moins partiellement non digestibles, et qui permet de réaliser des crèmes glacées se présentant sous la forme d'un mélange aéré semi-solide et pompable.

On connaît également par le document GB-A-2 131 669 un procédé pour fabriquer de la mousse au chocolat à l'aide d'un produit présentant une teneur relativement élevée en chocolat ou en matière grasse, qui, après être dispersé dans de l'eau, est battu sous forme d'une mousse mais cette dernière ne présente pas les caractéristiques de la mousse selon l'invention qui ont été rappelées ci-dessus.

La demande européenne EP-A-0 191 487 décrit un aliment multi-cellulaire stabilisé par incorporation d'acide alginique ou d'alginate.

Dans le but de mieux faire comprendre l'invention, on va en décrire maintenant, à titre d'illustration et sans aucun caractère limitatif, un mode de réalisation pris comme exemple.

Pour préparer une mousse de fraise selon l'invention on introduit dans un batteur
- 18 kg de purée de fraise à 19 % d'extrait sec
- 2,2 kg de sucre cristallisé
- 1 kg d'un mélange de gélatine et de charge contenant 45 % en poids de protéines laitières finement dispersées dans la masse de la gélatine.

On mélange ces produits dans un batteur pendant environ 2 minutes à la température de 10°C.

On laisse reposer le mélange pendant 10 minutes, et l'on obtient une composition qui a sensiblement le même aspect que celui de la purée de fraise, si ce n'est qu'elle est un peu plus épaisse.

On dissout dans trois litres d'eau à 85°C, 2,2 kg de sucre cristallisé et 1 kg de gélatine contenant 0,3 kg d'un émulsifiant tel que celui commercialisé sous la marque CREMODAN par la Société GRINSTED.

Le mélange est fouetté pour assurer la fusion et la dispersion de la gélatine dans l'eau ainsi que la dissolution du sucre.

On procède alors immédiatement au mélange des deux compositions obtenues comme il vient d'être décrit, alors qu'elles sont, pour la première à une température d'environ 10°C, et pour la seconde à une température d'environ 85°C.

Le mélange est effectué pendant 2 minutes dans un batteur sous azote.

La température finale du mélange est d'environ 18°C.

Cette composition contient environ 38 % d'extrait sec.

Conformément à l'invention, il est avantageux d'éviter le plus possible tout échauffement de la composition contenant la purée de fraise, de manière à ne pas détériorer ses qualités gustatives.

La composition selon l'invention ainsi obtenue est ensuite conditionnée puis surgelée en vue de sa commercialisation.

Pour préparer ultérieurement la mousse de fraise, on laisse décongeler la composition dont la fabrication vient d'être décrite et on la place dans un batteur avec de la crème de lait de vache froide à raison d'un kilo de préparation à base de purée de fraise pour 0,6 litre de crème. On peut également utiliser par exemple un mélange de lait et de crème de vache ou encore une crème végétale telle q'une crème de soja.

Après battage pendant environ 5 minutes, on obtient une excellente mousse de fraise qui présente les mêmes qualités que celles obtenues par le procédé traditionnel.

Il est bien entendu que le mode de réalisation qui vient d'être décrit ci-dessus ne présente aucun caractère limitatif et qu'il pourra recevoir toute modification désirable sans sortir pour cela du cadre de l'invention.

C'est ainsi par exemple que l'on peut selon l'invention réaliser toutes mousses habituelles à base de fruits tels que cerises, fraises, groseilles, pêches, abricots, agrumes, fruits de la passion ou marrons etc... .

On peut également, selon l'invention, réaliser si on le désire des mousses différentes telles que des mousses de légumes tels que carottes, haricots, tomates, céleris, ou encore d'autres mousses telles que des mousses de poissons ou de crustacés.

On peut également ajouter à la purée qui sert de base à la mousse différents ingrédients tels que des colorants ou des arômes en fonction des qualités gustatives que l'on désire conférer à la mousse.

## Revendications

1. Procédé de fabrication de mousses alimentaires telles que des mousses de fruits, à base de purée, de gélatine et de crème, **caractérisé par le fait : que** l'on mélange la purée à une composition constituée par de la gélatine contenant une charge finement dispersée ; que l'on incorpore au mélange ainsi obtenu une composition principalement constituée par un mélange de gélatine et d'émulsifiant ; et que l'on traite au batteur la composition ainsi obtenue à laquelle on a ajouté une composition à base de crème, ce qui permet d'obtenir directement la mousse alimentaire.

2. Procédé selon la revendication 1, **caractérisé par le fait que** l'on réalise une mousse de fruits en utilisant de la purée de fruits.

3. Procédé selon l'une quelconque des revendications précédentes, **caractérisé par le fait que** la charge dispersée dans la gélatine que l'on mélange à la purée est constituée par une poudre alimentaire qui n'est pas sensiblement soluble dans la gélatine fondue.

4. Procédé selon la revendication 3, **caractérisé par le fait que** la poudre alimentaire est une poudre de protéines laitières ou de protéines végétales.

5. Procédé selon l'une quelconque des revendications précédentes, **caractérisé par le fait que** le mélange de gélatine et de charge contient entre 1 à 8 % en poids et de préférence entre 2 et 5 % en poids de charge.

6. Procédé selon l'une quelconque des revendications précédentes, **caractérisé par le fait que** la composition à base de gélatine et d'émulsifiant qui est utilisée dans la deuxième phase du procédé contient de 15 à 50 % et de préférence de 25 à 35 % en poids d'un émulsifiant.

7. Procédé selon l'une quelconque des revendications précédentes, **caractérisé par le fait que** l'on utilise les compositions à base de gélatine à raison de 2,5 à 5,5 Kg et de préférence de 3,5 à 4,5 Kg de mélange de gélatine et d'émulsifiant pour 1 Kg de mélange de gélatine et de charge.

8. Procédé selon l'une quelconque des revendications précédentes, **caractérisé par le fait que** la gélatine contenant la charge est incorporée à la purée à une température suffisamment basse pour éviter de détériorer les qualités gustatives de la purée.

9. Procédé selon l'une quelconque des revendications précédentes, **caractérisé par le fait que** la proportion de gélatine contenant la charge est de 2 à 10 % en poids, et de préférence de 5 à 6 % en poids par rapport à la purée.

10. Procédé selon l'une quelconque des revendications précédentes, **caractérisé par le fait que** l'on incorpore du sucre, du sel ou des épices dans au moins une des compositions à base de gélatine.

11. Procédé selon l'une quelconque des revendications précédentes, **caractérisé par le fait que** l'on réalise la seconde phase du procédé dans laquelle on incorpore à la composition à base de gélatine et de purée la composition à base de gélatine et d'émulsifiant, et que l'on surgèle la composition obtenue.

12. Procédé selon l'une quelconque des revendications 1 à 11, **caractérisé par le fait que** l'on utilise une composition à base de crème comportant une ou plusieurs crèmes d'origine animale ou végétale éventuellement incorporées dans un lait d'origine animale ou végétale.

13. Composition permettant d'obtenir directement par mixage avec une composition à base de crème, une mousse alimentaire présentant un foisonnement d'environ 2 à 3 fois le volume de ses constituants, cette composition étant **caractérisée par le fait qu'**elle est constituée de purée, d'eau, de gélatine, d'une poudre de protéines laitières ou de protéines végétales, et d'émulsifiant avec ajout le cas échéant de sucre, de sel ou d'épices.

14. Composition selon la revendication 13, **caractérisée par le fait que** la mousse alimentaire est une mousse de fruits, et que la purée est une purée de fruits.

15. Composition selon la revendication 13, **caractérisée par le fait que** la charge est une poudre alimentaire qui n'est pas sensiblement soluble dans la gélatine fondue.

## Patentansprüche

1. Verfahren zur Herstellung von Schaumspeisen wie Früchtemousse auf Basis von Püree, Gelatine und Sahne, **dadurch gekennzeichnet, dass** das Püree gemischt wird mit einer Zubereitung, die mit Gelatine gebildet wird, welche einen fein dispergierten Zusatz enthält; dass dem so erhaltenen Gemisch eine Zubereitung, im Wesentlichen gebildet aus einem Gemisch aus Gelatine und Emulgator, zugegeben wird; und dass die so erhaltene Zubereitung, der eine Zubereitung auf Sahnebasis zugegeben wurde, mit einem Handrührgerät behandelt wird, was es ermöglicht, die Schaumspeise direkt zu erhalten.

2. Verfahren nach Anspruch 1, **dadurch gekennzeichnet, dass** eine Früchtemousse unter Verwendung des Früchtepürees realisiert wird.

3. Verfahren nach einem der vorstehenden Ansprüche, **dadurch gekennzeichnet, dass** der Zusatz, dispergiert in der Gelatine, die dem Püree zugemischt wird, mit einem Speisepulver gebildet wird, das in der geschmolzenen Gelatine nicht merklich löslich ist.

4. Verfahren nach Anspruch 3, **dadurch gekennzeichnet, dass** das Speisepulver ein Milchprotein- oder ein pflanzliches Proteinpulver ist.

5. Verfahren nach einem der vorstehenden Ansprüche, dadurch gekennzcichnet, dass das Gemisch aus Gelatine und Zusatz 1 bis 8 Gew.-% und bevorzugt 2 bis 5 Gew.-% Zusatz enthält.

6. Verfahren nach einem der vorstehenden Ansprüche, **dadurch gekennzeichnet, dass** die Zubereitung auf Basis von Gelatine und Emulgator, die in der zweiten Phase des Verfahrens verwendet wird, 15 bis 50 Gew.-% und bevorzugt 25 bis 35 Gew.-% Emulgator enthält.

7. Verfahren nach einem der vorstehenden Ansprüche, **dadurch gekennzeichnet, dass** die Zubereitungen auf Basis von Gelatine in einer Menge von 2,5 bis 5,5 kg und bevorzugt 3,5 bis 4,5 kg des Gemisches aus Gelatine und Emulgator für 1 kg des Gemisches aus Gelatine und Zusatz verwendet werden.

8. Verfahren nach einem der vorstehenden Ansprüche, **dadurch gekennzeichnet, dass** die Gelatine, welche den Zusatz enthält, dem Püree bei einer Temperatur zugegeben wird, die ausreichend niedrig ist, um die Verschlechterung der geschmacklichen Eigenschaften des Pürees zu vermeiden.

9. Verfahren nach einem der vorstehenden Ansprüche, **dadurch gekennzeichnet, dass** der Anteil der Gelatine, die den Zusatz enthält, 2 bis 10 Gew.-% und bevorzugt 5 bis 6 Gew.-% beträgt, bezogen auf das Püree.

10. Verfahren nach einem der vorstehenden Ansprüche, **dadurch gekennzeichnet, dass** Zucker, Salz oder Gewürze mindestens einer der Zubereitungen auf Basis von Gelatine zugegeben wird.

11. Verfahren nach einem der vorstehenden Ansprüche, **dadurch gekennzeichnet, dass** die zweite Phase des Verfahrens realisiert wird, in der der Zubereitung auf Basis von Gelatine und Püree die Zubereitung auf Basis von Gelatine und Emulgator zugegeben wird, und dass die erhaltene Zubereitung tiefgekühlt wird.

12. Verfahren nach einem der Ansprüche 1 bis 11, **dadurch gekennzeichnet, dass** eine Zubereitung auf Sahnebasis verwendet wird, umfassend eine Sahne oder mehrere tierischen oder pflanzlichen Ursprungs, gegebenenfalls einer Milch tierischen oder pflanzlichen Ursprungs zugesetzt.

13. Zubereitung, die es ermöglicht, durch Mischen mit einer Zubereitung auf Sahnebasis eine Schaumspeise direkt zu erhalten, wobei diese eine Volumenzunahme aufweist, die etwa dem zwei- bis dreifachen Volumen ihrer Bestandteile entspricht, wobei diese Zubereitung **dadurch gekennzeichnet ist, dass** sie aus Püree, Wasser, Gelatine, Milchprotein- oder pflanzlichem Proteinpulver und Emulgator gebildet wird, gegebenenfalls mit der Zugabe von Zucker, Salz oder Gewürzen.

14. Zubereitung nach Anspruch 13, **dadurch gekennzeichnet, dass** die Schaumspeise eine Früchtemousse ist, und dass das Püree ein Früchtepüree ist.

15. Zubereitung nach Anspruch 13, **dadurch gekennzeichnet, dass** der Zusatz ein Speisepulver ist, das in der geschmolzenen Gelatine nicht merklich löslich ist.

## Claims

1. Process for the manufacture of food mousses such as fruit mousses, based on purée, gelatin and cream, **characterized by** the fact of : mixing the purée with a composition consisting of gelatin containing a finely dispersed filler ; incorporating into the mixture thus obtained, a composition mainly consisting of a mixture of gelatin and emulsifier; treating with a beater the composition thus obtained, to which a cream-based composition has been added, which makes it possible to obtain the food mousse directly.

2. Process according to claim 1, **characterized by** the fact of preparing a fruit mousse by using fruit purée.

3. Process according to any one of the preceding claims, **characterized by** the fact that the filler dispersed in the gelatin which is mixed with the purée consists of a food powder which is not appreciably soluble in molten gelatin.

4. Process according to claim 3, **characterized by** the fact that the food powder is a milk protein or plant protein powder.

5. Process according to any one of the preceding claims, **characterized by** the fact that the mixture of gelatin and filler contains between 1 to 8% by weight and preferably between 2 and 5% by weight of filler.

6. Process according to any one of the preceding claims, **characterized by** the fact that the composition based on gelatin and emulsifier which is used in the second phase of the process contains from 15 to 50% and preferably from 25 to 35% by weight of an emulsifier.

7. Process according to any one of the preceding claims, **characterized by** the fact of using the gelatin-based compositions in an amount of 2.5 to 5.5 kg and preferably of 3.5 to 4.5 kg of mixture of gelatin and emulsifier per 1 kg of mixture of gelatin and filler.

8. Process according to any one of the preceding claims, **characterized by** the fact that the gelatin containing the filler is incorporated into the purée at a sufficiently low temperature so as to avoid to damage the taste properties of the purée.

9. Process according to any one of the preceding claims, **characterized by** the fact that the proportion of gelatin containing the filler is from 2 to 10% by weight, and preferably from 5 to 6% by weight relative to the purée.

10. Process according to any one of the preceding claims, **characterized by** the fact of incorporating sugar, salt or spices into at least one of the gelatin-based compositions.

11. Process according to any one of the preceding claims, **characterized by** the fact of carrying out the second phase of the process in which the composition based on gelatin and emulsifier is incorporated into the composition based on gelatin and purée, and of deep-freezing the obtained composition.

12. Process according to any one of claims 1 to 11, **characterized by** the fact of using a cream-based composition comprising one or more creams of animal or plant origin, optionally incorporated into a milk of animal or plant origin.

13. Composition which makes it possible to obtain directly by mixing with a cream-based composition, a food mousse exhibiting an overrun of about 2 to 3 times the volume of its constituents, said composition being **characterized by** the fact that it consists of purée, water, gelatin, a milk protein or plant protein powder and emulsifier, optionally with addition of sugar, salt or spices.

14. Composition according to claim 13, **characterized by** the fact that the food mousse is a fruit mousse, and that the purée is a fruit purée.

15. Composition according to claim 13, **characterized by** the fact that the filler is a food powder which is not appreciably soluble in molten gelatin.
